# FASCICULE DE BREVET EUROPEEN

(11) **EP 0 694 842 B1**
(45) Date de publication et mention de la délivrance du brevet: **20.01.1999**
(21) Numéro de dépôt: 95401697.8
(22) Date de dépôt: 17.07.1995
(51) Int. Cl.: G06F 11/28, G06F 11/10, G06F 11/08

(54) **Procédé et dispositif de sécurisation du déroulement de séquences linéaires d'ordres exécutés par un processeur**
Verfahren und Einrichtung zur Ablaufssicherung einer durch einen Prozessor erzeugten linearen Folge von Befehlen
Method and device for securing the flow of linear sequences of orders executed by a processor

(30) Priorité: 27.07.1994 FR 9409284
(43) Date de publication de la demande: 31.01.1996
(73) Titulaire: SEXTANT AVIONIQUE, 92366 Meudon la Forêt Cédex (FR)
(72) Inventeur: Pitot, Christian, F-92100 Boulogne (FR); Martinez, Michel, F-33127 Martignas sur Jalle (FR)
(74) Mandataire: de Saint-Palais, Arnaud Marie

(56) Documents cités:
- US-A- 4 074 229
- US-A- 4 108 359
- IBM TECHNICAL DISCLOSURE BULLETIN, vol.21, no.6, Novembre 1978 page 2382 ADLER 'error check of data with implicit sequence number'

## Description

La présente invention concerne un dispositif de contrôle du déroulement de séquences linéaires d'instructions exécutées par un processeur.

Elle s'applique notamment, mais non exclusivement, aux dispositifs d'affichage d'informations graphiques permettant par exemple la conduite de véhicules.
Généralement, de tels dispositifs comprennent un processeur, des mémoires et un écran de visualisation et font appel à des séquences d'informations ou d'instructions prédéfinies constituant des motifs à visualiser, stockées dans des mémoires mortes.
Pour être visualisées, ces séquences d'informations ou d'instructions repérées chacune par une adresse de début, doivent être exécutées pour provoquer l'écriture du motif correspondant dans la mémoire image du dispositif.

Il s'avère que dans le contexte de la conduite de véhicules, l'affichage d'informations erronées peut, s'il n'est pas détecté, conduire à des interprétations potentiellement catastrophiques.

Le document US 4 108 359 divulgue un procédé de détection d'erreurs dans le déroulement d'une séquence linéaire d'ordres selon le préambule de la revendication 1.

La présente invention a pour but de détecter les invraisemblances de séquencement du tracé susceptible de trahir une telle défaillance.

A cet effet, elle propose un procédé de détection d'erreurs dans le déroulement d'une séquence linéaire d'ordres exécutés par un processeur et mémorisés dans une mémoire à une adresse de début prédéterminée exprimée sous la forme d'un mot binaire comprenant un nombre prédéterminé de bits, ladite séquence comportant une série de mots binaires comprenant chacun au moins un bit non utilisé dans le codage des ordres de la séquence,
caractérisé en ce qu'il comprend :
- l'association de chaque mot de la séquence à un bit du mot d'adresse de manière à ce que l'ordre des mots dans la séquence corresponde à un ordre prédéterminé des bits dans le mot d'adresse,
- lors de la mémorisation de la séquence en mémoire, la détermination pour chaque mot de la séquence de la valeur du bit inutilisé, de manière à ce que la valeur du bit du mot d'adresse associé soit égale au résultat d'une fonction prédéterminée appliquée aux bits du mot de la séquence, et
- lors de la lecture en mémoire d'un mot de la séquence, la recherche du bit associé du mot d'adresse de début de la séquence à l'aide du rang du mot lu dans la séquence, la comparaison du résultat de ladite fonction appliquée aux bits du mot lu avec la valeur du bit associé du mot d'adresse, et l'émission d'un signal d'erreur si la comparaison fait apparaître une différence.

De cette manière, on contrôle simultanément le séquencement de la lecture des mots de la séquence et la valeur des mots lus.

Avantageusement, la fonction appliquée aux bits des mots de la séquence est du type calcul de parité, ce qui permet de contrôler d'une manière globale tous les bits des mots lus.

Un mode de réalisation du procédé selon l'invention sera décrit ci-après, à titre d'exemple non limitatif, avec référence aux dessins annexés dans lesquels :
La figure 1 représente schématiquement un dispositif de détection d'erreur conformément au procédé selon l'invention
La figure 2 représente schématiquement un dispositif de détection d'erreur selon un second mode d'exécution.

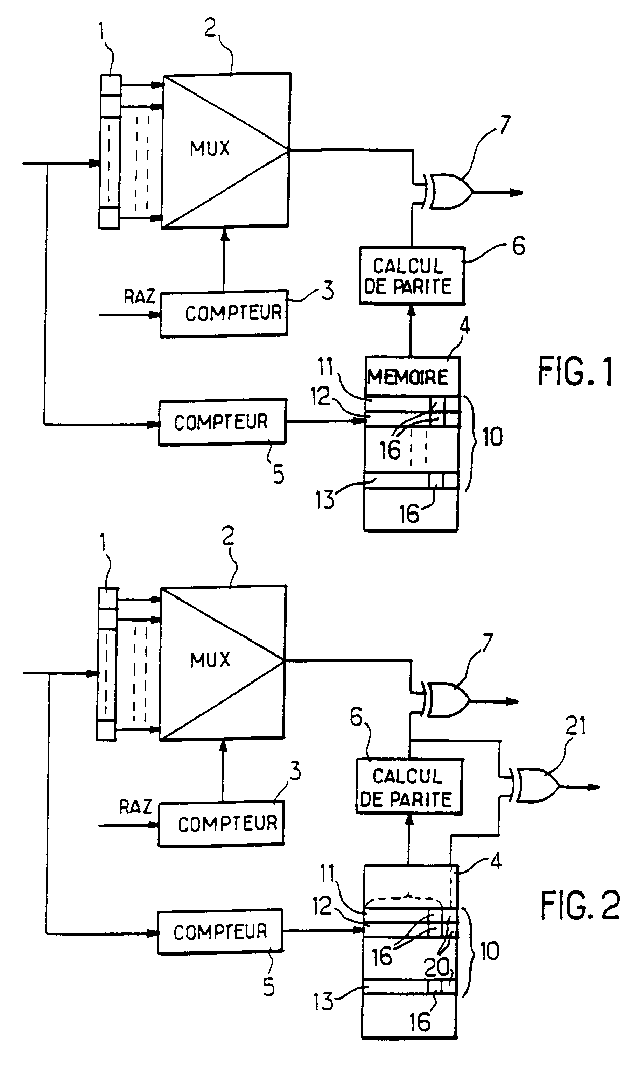

Le dispositif de détection d'erreur représenté figure 1 comprend un registre 1 couplé à un multiplexeur 2, lequel est commandé par un compteur 3 permettant de sélectionner un bit du mot contenu dans le registre 1 en fonction de la valeur du compteur 3.

Ce registre 1 est destiné à recevoir l'adresse binaire du premier mot 11 d'une séquence linéaire 10 d'instructions à exécuter par un processeur, et stockée dans une mémoire 4.

Le mot binaire 12 lu dans la mémoire 4 à l'adresse fournie par un compteur 5 est traité par un circuit, par exemple, de détection de parité, dont la sortie est connectée à une entrée d'une porte OU EXCLUSIF 7 utilisée en comparateur binaire. Par ailleurs, la sortie du multiplexeur 2 est connecté à une autre entrée de la porte OU EXCLUSIF 7 dont la sortie délivre un signal d'erreur si les deux entrées ne sont pas au même niveau logique.

Lors du lancement de l'exécution de la séquence 10, le processeur charge l'adresse binaire du début de la séquence 10 dans le registre 1 et dans le compteur 5 de lecture de la mémoire 4 et initialise le compteur 3 à 0.
Ainsi, le multiplexeur est commandé de manière à sélectionner le bit de rang 1 selon un ordre prédéfini du registre 1, tandis que le premier mot de la séquence 10 est lu. Si la parité de ce mot est différente de la valeur du premier bit de l'adresse de début de la séquence, on obtient un signal d'erreur en sortie de la porte OU EXCLUSIF 7. Dans cet exemple, le signal d'erreur est actif à l'état logique 1.

Lors de l'étape suivante, les deux compteurs 3 et 5 sont incrémentés, ce qui provoque la sélection du second bit de l'adresse de début de la séquence 10 dans l'ordre prédéfini et la lecture du second mot dans la mémoire 4 et donc la comparaison par la porte ou EXCLUSIF 7 de la parité du second mot avec le second bit de l'adresse de début. Ces opérations se répètent jusqu'au dernier mot 13 de la séquence 10, les compteurs 3 et 5 étant incrémentés lors de la lecture du mot suivant dans la séquence 10. Par ailleurs, le compteur 3 est initialisé à zéro à chaque fois qu'il atteind la valeur du nombre de bits du mot d'adresse, de manière à sélectionner cycliquement chacun des bits du registre 1. Ainsi, chacun des bits du mot d'adresse de début de la séquence est associé au mot de la séquence ayant un rang modulo n égal au rang du bit du mot d'adresse, n étant le nombre de bits du mot d'adresse.

La coïncidence entre la parité des mots de la séquence et la valeur des bits correspondants de l'adresse de début de la séquence est assurée grâce à la présence d'un bit inutilisé 16 dans chaque mot de la séquence. Ce bit inutilisé 16 est positionné au moment du stockage de la séquence 10 en mémoire 4 à une valeur telle que cette coïncidence soit obtenue.

Ce dispositif permet donc de contrôler que tous les mots de la séquence ont effectivement été lus, en respectant leur ordre dans la séquence. Par ailleurs, si la parité d'un mot est élaborée à l'aide de tous les bits du mot, ce dispositif permet également de contrôler la valeur de chaque mot.

Selon le mode d'exécution de l'invention représenté figure 2, chaque mot 11,12,13 de la séquence 10 comprend un second bit inutilisé dans le codage des instructions de tracé, que l'on utilise dans le contrôle du séquencement précédemment décrit pour mémoriser la parité du mot. La valeur de ce bit 20 est comparée à l'aide d'une seconde porte OU EXCLUSIF 21, par exemple, à la valeur délivrée par le circuit de calcul de parité 6. Ainsi, la seconde porte OU EXCLUSIF 21 délivre un second signal d'erreur, si les niveaux logiques des signaux en entrée sont différents.
De cette manière, si la parité hors bit 20 du mot lu dans la mémoire 4 correspond à la valeur du bit 20 de ce même mot et si la porte OU EXCLUSIF 7 délivre un signal d'erreur, on se trouve en présence d'une erreur de séquencement de l'exécution de la séquence 10. En revanche si la porte OU EXCLUSIF 21 délivre un signal d'erreur, elle indique une erreur de parité du mot lu et donc que ce mot a une valeur erronée.

Cette disposition permet donc de distinguer les erreurs de séquencement indiquées par la première porte OU EXCLUSIF 7, des erreurs de lecture ou d'écriture indiquées par la seconde porte OU EXCLUSIF 21.

## Revendications

1. Procédé de détection d'erreurs dans le déroulement d'une séquence linéaire d'ordres exécutés par un processeur et mémorisés dans une mémoire (4) à une adresse de début prédéterminée et exprimée sous la forme d'un mot binaire comprenant un nombre prédéterminé de bits, ladite séquence (10) comportant une série de mots binaires comprenant chacun au moins un bit (16) non utilisé dans le codage desdits ordres,
caractérisé en ce qu'il comprend :
- l'association de chaque mot (11,12,13) de la séquence (10) à un bit du mot d'adresse de manière à ce que l'ordre des mots (11,12,13) dans la séquence (10) corresponde à un ordre prédéfini des bits dans le mot d'adresse,
- lors de la mémorisation de la séquence (10) en mémoire (4), la détermination pour chaque mot (11,12,13) de la séquence (10) de la valeur du bit inutilisé (16) de manière à ce que la valeur du bit du mot d'adresse associé soit égale au résultat d'une fonction prédéterminée appliquée aux bits du mot de la séquence (16), et
- lors de la lecture en mémoire (4) d'un mot (11,12,13) de la séquence, la recherche du bit associé du mot d'adresse de début de la séquence (10) à l'aide du rang du mot lu dans la séquence (10), la comparaison du résultat de ladite fonction appliquée aux bits du mot lu avec la valeur du bit associé du mot d'adresse, et l'émission d'un signal d'erreur si la comparaison fait apparaître une différence.

2. Procédé selon la revendication 1,
caractérisé en ce que ladite fonction est une fonction de calcul de parité.

3. Procédé selon la revendication 1 ou 2,
caractérisé en ce que chaque bit du mot d'adresse est associé aux mots de la séquence dont le rang modulo n dans la séquence est égal au rang du bit associé dans le mot d'adresse, n étant le nombre de bits du mot d'adresse.

4. Dispositif pour la mise en oeuvre du procédé selon l'une des revendications précédentes,
caractérisé en ce qu'il comprend :
- un registre (1) contenant ladite adresse de début, couplé à un multiplexeur (2) commandé par un premier compteur (3) et permettant de sélectionner un bit du mot d'adresse stocké dans le registre (1) en fonction de la valeur du premier compteur (3),
- un second compteur (5) initialisé à la valeur de l'adresse de début de la séquence (10), qui détermine l'adresse du mot (1,12,13) à lire dans la mémoire (4),
- un circuit de calcul de parité (6) couplé à la mémoire (4) pour calculer la parité du mot dont l'adresse est indiquée par la valeur du second compteur (5), et
- une porte OU EXCLUSIF (7) recevant en entrée les signaux issus du circuit de calcul de parité (6) et du multiplexeur (2), et délivrant un signal d'erreur si les niveaux logiques respectifs des deux signaux en entrée sont différents.

5. Dispositif selon la revendication 4,
caractérisé en ce qu'il comprend une seconde porte OU EXCLUSIF (21) qui compare le signal délivré par le circuit de calcul de parité (6) avec la valeur d'un second bit inutilisé (20) de chaque mot de la mémoire (4) dans lequel on a mémorisé la parité de la partie utile du mot, la sortie de la seconde porte OU EXCLUSIF (21) délivrant un signal d'erreur si la parité calculée du mot lu est différente de la parité mémorisée par le second bit inutilisé (20).

## Patentansprüche

1. Verfahren für das Aufspüren von Fehlern innerhalb des Ablaufs einer linearen Anweisungssequenz, die von einem Prozessor ausgeführt und in einem Speicher (4) an einer vorgegebenen Anfangsadresse gespeichert und in Form eines binären Wortes ausgedrückt wird, das eine vorgegebenen Anzahl von Bits enthält, wobei die genannte Sequenz (10) eine Serie von binären Wörtern beinhaltet, die jeweils mindestens ein Bit (16) beinhalten, das nicht für die Codierung der genannten Anweisungen verwendet wird,
dadurch gekennzeichnet, daß es folgendes beinhaltet:
- die Zuordnung jedes Wortes (11, 12, 13) der Sequenz (10) zu einem Bit des Adressenwortes, so daß die Reihenfolge der Wörter (11, 12, 13) innerhalb der Sequenz (10) einer vorab festgelegten Reihenfolge der Bits in dem Adressenwort entspricht,
- bei der Speicherung der Sequenz (10) im Speicher (4) erfolgt die Bestimmung des Wertes des nicht verwendeten Bits (16) für jedes Wort (11, 12, 13) der Sequenz (10), so daß der Wert des zugeordneten Bits des Adressenwortes mit dem Ergebnis einer vorab festgelegten Funktion übereinstimmt, die auf die Bits des Wortes der Sequenz (16) angewendet wird, und
- anläßlich des Lesens eines Wortes (11, 12, 13) der Sequenz im Speicher (4) erfolgt die Suche nach dem Bit, das dem Adressenwort zu Beginn der Sequenz (10) zugeordnet worden ist, mit Hilfe der Rangfolge des Wortes, das in der Sequenz (10) gelesen worden ist, ein Vergleich des Ergebnisses der genannten Funktion, die auf die Bits des gelesenen Wortes angewendet worden ist, mit dem Wert des Bits, das dem Adressenwort zugeordnet worden ist, und die Absendung eines Fehlersignals, wenn der Vergleich eine Differenz ergeben hat.

2. Verfahren gemäß Patentanspruch 1,
dadurch gekennzeichnet, daß die genannte Funktion eine Funktion zur Paritätsberechnung ist.

3. Verfahren gemäß Patentanspruch 1 oder 2,
dadurch gekennzeichnet, daß jedes Bit des Adressenwortes den Wörtern der Sequenz zugeordnet ist, deren Rangfolge Modul n innerhalb der Sequenz mit der Rangfolge des zugeordneten Bits im Adressenwort übereinstimmt, wobei n die Anzahl der Bits des Adressenwortes angibt.

4. Vorrichtung für die Verwendung des Verfahrens gemäß einem der vorausgehenden Patentansprüche,
dadurch gekennzeichnet, daß sie folgendes beinhaltet:
- ein Register (1), das die genannte Anfangsadresse enthält, gekoppelt mit einem Multiplexer (2), der von einem ersten Zähler (3) gesteuert wird und die Auswahl eines Bits des Adressenwortes ermöglicht, das in dem Register (1) gespeichert ist, abhängig von dem Wert des ersten Zählers (3),
- einen zweiter Zähler (5), der auf den Wert der Anfangsadresse der Sequenz (10) initialisiert worden ist und der die Adresse des Wortes (11, 12, 13) ermittelt, das aus dem Speicher (4) gelesen werden soll,
- einen Schaltkreis für die Paritätsberechnung (6), gekoppelt mit dem Speicher (4), um die Parität des Wortes zu berechnen, dessen Adresse durch den Wert des zweiten Zählers (5) angegeben wird, und
- ein EXKLUSIVES ODER - Gatter (7), das am Eingang die Signale entgegennimmt, die von dem Schaltkreis für die Paritätsberechnung (6) und vom Multiplexer (2) stammen und das ein Fehlersignal abgibt, wenn die jeweiligen logischen Ebenen der beiden Eingangssignale voneinander abweichen.

5. Vorrichtung gemäß Patentanspruch 4,
dadurch gekennzeichnet, daß sie ein zweites EXKLUSIVES ODER - Gatter (21) beinhaltet, das das von dem Schaltkreis für die Paritätsberechnung (6) abgegebene Signal mit dem Wert eines zweiten nicht verwendeten Bits (20) jedes Wortes des Speichers (4) vergleicht, in dem die Parität des nützlichen Teils des Wortes abgespeichert worden ist, wobei der Ausgang des zweiten EXKLUSIVES ODER - Gatter (21) ein Fehlersignal abgibt, wenn die berechnete Parität des gelesenen Wortes von der Parität abweicht, die von dem zweiten nicht verwendeten Bit (20) gespeichert worden ist.

## Claims

1. A method for detecting errors in the execution of a linear sequence of commands performed by a processor and stored in a memory (4) at a predetermined start address and expressed in the form of a binary word comprising a predetermined number of bits, said sequence (10) comprising a series of binary words each comprising at least one bit (16) not used in the coding of said commands, characterized in that it comprises :
- the associating of each word (11, 12, 13) in the sequence (10) with a bit of the address word so that the order of said words (11, 12, 13) in said sequence (10) corresponds to a predetermined order of said bits in said address word,
- during storage of said sequence (10) in said memory (4), the determining, for each word (11, 12, 13) in said sequence (10), of the value of the unused bit (16) in order for the bit value of the associated address word to be equal to the result of a predetermined function applied to the bits of said word in said sequence (10), and
- during reading in said memory (4) of a word (11, 12, 13) from said sequence, the searching for the associated bit of said sequence (10) start address word by means of the rank of said word read in said sequence (10), the comparing of the result of said function applied to said bits of said word read with the value of the associated bit of said address word, and the transmission of an error signal if the comparison reveals a difference.

2. The method as claimed in claim 1, characterized in that said function is a parity calculation function.

3. The method as claimed in claim 1 or 2, characterized in that each bit of said address word is associated with the words of said sequence of which the modulo-n rank in said sequence is equal to the rank of the associated bit in said address word, n being the number of bits in said address word.

4. A device for the implementation of the method as claimed in one of the preceding claims, characterized in that it comprises :
- a register (1) containing said start address and coupled with a multiplexer (2) controlled by a first counter (3) and enabling a bit of the word contained in said register (1) to be selected as a function of the value of said first counter (3),
- a second counter (5) initialized at the value of the sequence (10) start address, which determines the address of the word (11, 12, 13) to be read in said memory (4),
- a parity calculating circuit (6) coupled with said memory (4) to calculate the parity of the word of which the address is indicated by the value of said second counter (5),
- an XOR gate (7) receiving at input the signals supplied by said parity calculating circuit (6) and from said multiplexer (2), and supplying an error signal if the respective logic levels of the two signals at input are different.

5. The device as claimed in claim 4, characterized in that said device comprises a second XOR gate (21) which compares the signal supplied by said parity calculating circuit (6) with the value of a second unused bit (20) of each word in the memory (4) in which the parity of the useful part of the word has been stored, the output of said second XOR gate (21) providing an error signal if the calculated parity of said word differs from the memorized parity of said second unused bit (20).
